# EUROPÄISCHE PATENTSCHRIFT

(11) **EP 3 374 214 B1**
(45) Veröffentlichungstag und Bekanntmachung des Hinweises auf die Patenterteilung: **02.10.2019**
(21) Anmeldenummer: 16788063.2
(22) Anmeldetag: 24.10.2016
(51) Int. Cl.: B60G 21/055, B60G 21/10, B60G 17/016

(54) **HYDRAULISCHES WANKSTABILISIERUNGSSYSTEM EINES ZWEISPURIGEN FAHRZEUGS**
HYDRAULIC ROLL STABILIZATION SYSTEM OF A TWO-TRACK VEHICLE
SYSTÈME DE STABILISATION ANTIROULIS HYDRAULIQUE D'UN VÉHICULE À DEUX VOIES

(30) Priorität: 10.11.2015 DE 102015222135
(43) Veröffentlichungstag der Anmeldung: 19.09.2018
(73) Patentinhaber: Bayerische Motoren Werke Aktiengesellschaft, 80809 München (DE)
(72) Erfinder: GEBHARDT, Dirk, 80634 Muenchen (DE)
(86) Internationale Anmeldenummer: PCT/EP2016/075527
(87) Internationale Veröffentlichungsnummer: WO 2017/080803

(56) Entgegenhaltungen:
- EP-A1- 1 426 210
- EP-A1- 1 785 293
- EP-A1- 2 065 295
- WO-A1-2005/072999
- DE-A1- 10 002 452
- DE-A1-102007 063 543
- DE-C1- 19 846 394

## Beschreibung

Die Erfindung betrifft ein hydraulisches Wankstabilisierungssystem eines zweispurigen Fahrzeugs mit einem geteilten Querstabilisator an zumindest einer Achse, dessen Stabilisatorhälften mittels eines hydraulischen Schwenkmotors gegeneinander tordierbar sind, indem ein von einer Pumpe gefördertes Hydraulikmedium durch Hydraulikleitungen mit mehreren von einer elektronischen Steuereinheit ansteuerbaren Ventilen gezielt in zwei einander entgegen wirkende Arbeitskammern des Schwenkmotors eingebracht wird. Zum Stand der Technik wird beispielshalber auf die EP 1 426 210 A1, die den Oberbegriff der Ansprüche 1 und 8 offenbart, oder die WO 2005/072999 A1 verwiesen, während ein Beispiel für einen hydraulischen Schwenkmotor in einem Wankstabilisierungssystem eines Fahrzeugs in der US 5,601,165 gezeigt ist.

Die dem Fachmann bekannte hydraulische Wankstabilisierung kann unter gewissen Gesichtspunkten, so insbesondere hinsichtlich Belastung und Gestaltung des elektrischen Bordnetzes des Fahrzeugs, günstiger sein als eine alternativ auch mögliche Verwendung eines Elektromotors zum Tordieren der Stabilisatorhälften, jedoch ist der bislang bekannte Stand der Technik zur hydraulischen Wankstabilisierung unter gesamtenergetischer Betrachtungsweise verbesserungswürdig, was hiermit aufgezeigt werden soll (= Aufgabe der vorliegenden Erfindung).

Die Lösung dieser Aufgabe ist für ein hydraulisches Fahrzeug-Wankstabilisierungssystem nach dem Oberbegriff des Anspruchs 1 dadurch gekennzeichnet, dass die Pumpe elektromotorisch angetrieben und damit hinsichtlich ihrer Förderleistung regelbar ist und dass in jeder zu einer der beiden Arbeitskammern des Schwenkmotors führenden Hydraulikleitung ein dieser Arbeitskammer zugeordnetes Schaltventil vorgesehen ist, welche Schaltventile von der elektronischen Steuereinheit unter Berücksichtigung des Fahrzustandes des Fahrzeugs sowie dem Wert des hydraulischen Differenzdrucks zwischen den beiden Arbeitskammern gezielt geöffnet oder geschlossen werden. Vorteilhafte Aus- und Weiterbildungen sind Inhalt der Unteransprüche.

Ein erfindungsgemäßes System ermöglicht es, die Federrate (= Härte oder Federsteifigkeit) des Querstabilisators konstant wirkend zu variieren, ohne dass hierfür die das Hydraulikmedium fördernde Pumpe kontinuierlich betrieben werden muss. Mithilfe der arbeitskammer-individuellen Schaltventile ist es nämlich möglich, in jeder der beiden Arbeitskammern des Schwenkmotors einen praktisch beliebigen (und nur durch die Grundauslegung des Systems in der Höhe begrenzten) Überdruck gegenüber Umgebungsdruck einzustellen und diesen anschließend in der Arbeitskammer "einzusperren", wonach die Pumpe stillgesetzt werden kann. Die jeweils eingestellten Hydraulikdrücke können dann weiter wirken, ohne dass hierfür Energie in das hydraulische System eingebracht werden muss. Herrscht in den beiden Arbeitskammern des Schwenkmotors bspw. ein hoher Druck, so wirkt der Stabilisator sehr steif, während er dann, wenn in keiner der Arbeitskammern ein Überdruck herrscht, sehr weich ist. Wird in den beiden einander entgegen wirkenden Arbeitskammern ein gleich hoher "mittlerer" Hydraulikdruck (betragsmäßig zwischen Null und dem vorstehend genannten hohen Druck liegend) eingesperrt, so wirkt der Querstabilisator mit einer mittleren Federrate, die zwischen "sehr steif und "sehr weich" liegt. Diese nun vorliegende Möglichkeit der variablen Einstellung einer Federrate ist bei bislang bekannten hydraulischen Fahrzeug-Wankstabilisierungssystemen nur gegeben, wenn die Hydraulik-Pumpe kontinuierlich betrieben wird, da beim Stand der Technik bislang nur vorgesehen war, mit einem hydraulischen Wankstabilisierungssystem gezielt ein Kontermoment in das Fahrwerk des Fahrzeugs einzuleiten, was nur unter Zufuhr von Energie, nämlich "Differenzdruck-Energie" der Hydraulik-Pumpe möglich ist. Dabei wurde im Stand der Technik auf schnellstes Reaktionsvermögen Wert gelegt, weshalb quasi kontinuierlich Hydraulikmedium unter gewissem Druck umgewälzt wurde und dies dann bedarfsweise in die jeweilige Arbeitskammer des Schwenkmotors geleitet wurde. Insbesondere im Zusammenhang mit der Weiterentwicklung von selbsttätig wirkenden Fahrzeug-Bremssystem wurde jedoch die heutige Fahrzeug-Hydrauliktechnik nicht nur bei den Schaltventilen, sondern auch bei Pumpen derart leistungsfähig, dass auch an einem hydraulischen Fzg.-Wankstabilisierungssystem kein konstantes Umwälzen von Hydraulikmedium mehr erforderlich ist. Dies erlaubt nun den Einsatz eines erfindungsgemäßen Systems, bei dem die Hydraulik-Pumpe auch still gesetzt werden kann und dennoch dank eines in den Arbeitskammern des Schwenkmotors eingesperrten hohen Hydraulikdrucks ein Querstabilisator mit hoher Federrate dargestellt werden kann.

Im unabhängigen Patentanspruch ist weiter angegeben, dass eine elektronische Steuereinheit die den Arbeitskammern des Schwenkmotors zugeordneten Schaltventile unter Berücksichtigung des Fahrzustandes des Fahrzeugs sowie dem Differenzwert des Hydraulikdrucks öffnet oder schließt. Die Berücksichtigung des hydraulischen Differenzdrucks ist dabei so zu verstehen, dass die elektronische Steuereinheit praktisch eine vorgegebene Druckdifferenz einstellt, wobei die Vorgabe üblicherweise von einem Fahrdynamik-Regelsystem stammt, welches den jeweiligen Fahrzustand analysiert und daraufhin ggf. unter Berücksichtigung weiterer Randbedingungen, so insbesondere einer Sollvorgabe des Fahrers des Fahrzeugs, geeignete Aktuatoren im Fahrwerk geeignet ansteuert. Ein solcher Aktuator ist auch der hydraulische Schwenkmotor eines erfindungsgemäßen Wankstabilisierungssystems, und es kann bspw. In Abhängigkeit von der aktuellen Fahrgeschwindigkeit und Gierrate des Fahrzeugs, ggf. auch in Abhängigkeit von einem gemessenen Aufbau-Wankwinkel, ein bestimmter Differenzdruck zwischen den Arbeitskammern des Schwenkmotors vorgegeben werden, der dann am Schwenkmotor unter Berücksichtigung des aktuellen und folglich messbaren Differenzdruckwertes durch die besagte elektronische Steuereinheit eingestellt wird.

Es kann diese oder eine solche elektronische Steuereinheit auch den elektrischen Antriebsmotor der Pumpe steuern, und zwar insbesondere unter Berücksichtigung des Fahrzustandes des Fahrzeugs, ggf. auch unter Berücksichtigung des Wertes des hydraulischen Differenzdrucks zwischen der Förderseite der Pumpe und deren Saugseite bzw. einem Tank oder einem Ausgleichsbehälter oder dgl., in den hinein von der Pumpe vorhergehend gefördertes, jedoch nicht benötigtes Hydraulikmedium gelangt. Bei letzterem kann es sich auch um aus einer Arbeitskammer des Schwenkmotors abgeführtes Hydraulikmedium handeln. Vorzugsweise wird - wie bereits weiter oben ausgeführt wurde - die Pumpe bzw. der diese antreibende Elektromotor nur dann betrieben, wenn tatsächlich Hydraulikmedium in eine Arbeitskammer eingeführt werden soll. Ist diese Arbeitskammer dann mit Hydraulikmedium unter gewünschtem Druck befüllt, so kann diese Arbeitskammer mittels des zugeordneten Schaltventils abgesperrt und die Pumpe bzw. deren Antriebsmotor stillgesetzt werden. Dies gilt insbesondere für eine Geradeausfahrt des Fahrzeugs, wenn kein Wanken des Aufbaus erfolgen kann. Um auf der Förderseite der Pumpe auch nur ein bestimmtes Druckniveau entstehen zu lassen (und ggf. zur Befüllung einer Arbeitskammer zur Verfügung zu haben), sollte dieses Druckniveau entweder gegenüber Umgebungsdruck oder als vorstehend beschriebener Differenzdruck messbar sein, d.h. es sollte ein entsprechender Drucksensor vorgesehen sein, dessen Signale von der elektronischen Steuereinheit geeignet berücksichtigt werden.

Um im Falle einer Störung kein unsicheres Fahrverhalten des Fahrzeugs zu riskieren, wird ein stromlos geschlossenes Sicherheits-Schaltventil in einer den beiden Arbeitskammern des Schwenkmotors zugeordneten hydraulischen Versorgungsleitung vorgeschlagen, welche sich in Förderrichtung der Pumpe betrachtet stromab dieses Sicherheits-Schaltventils in den einzelnen Schwenkmotor-Arbeitskammern zugeordnete Hydraulikleitungen verzweigt. Damit kann im Störungsfall, welcher auch als ein Ausfall von elektrischer Energie auftreten kann, kein weiteres Hydraulikmedium unter Druck in die Arbeitskammern des Schwenkmotors gelangen. Vorzugsweise sollten dann die den Arbeitskammern des Schwenkmotors zugeordneten Schaltventile stromlos offen sein, damit unter höherem Druck stehendes Hydraulikmedium im Störfall aus den Arbeitskammern austreten kann.

Weiterhin fakultativ vorgeschlagen wird für den hydraulischen Schaltkreis eines erfindungsgemäßen Wankstabilisierungssystem ein Druckbegrenzungsventil, welches die Höhe des am Schwenkmotor anliegenden Förderdrucks der Pumpe begrenzt, d.h. von der Pumpe führt eine Förderleitung zum Druckbegrenzungsventil, stromauf dessen Hydraulikmedium für die Arbeitskammern abgegriffen wird, während durch einen Rücklaufzweig des Druckbegrenzungsventils im Rahmen der Einhaltung eines maximalen Hydraulik-Druckwerts abgeführtes überschüssiges Hydraulikmedium in einen (bereits genannten) Tank oder Ausgleichsbehälter gelangt, in welchem vorzugsweise Umgebungsdruck herrscht. Dabei kann es sich um ein regelbares Druckbegrenzungsventil handeln, so dass der sich stromauf dessen einstellende Hydraulikdruck, der sich bei geöffnetem Schaltventil dann auch in der jeweiligen Arbeitskammer des Schwenkmotors einstellt, vorzugsweise durch die elektronische Steuereinheit veränderbar ist. Dann kann vorgesehen sein, dass bspw. bei Abstellen des Fahrzeugs oder im Falle einer allgemeinen Störung selbsttätig ein relativ niedriger Maximaldruckwert am Druckbegrenzungsventil eingestellt wird.

Besonders sinnvoll sind zwei Druckbegrenzungsventile, welche nicht zwangsweise regelbar sein müssen, dabei an einem zweiachsigen Fahrzeug, das sowohl an der Vorderachse als auch an der Hinterachse einen hydraulischen Schwenkmotor zur Wankstabilisierung aufweist. Um ein eher untersteuerndes und somit sichereres Fahrzeug-Fahrverhalten darzustellen, sollte bekanntlich der Vorderachs-Stabilisator etwas steifer als derjenige der Hinterachse sein, weshalb vorgeschlagen wird, ein der Hinterachse zugeordnetes Druckbegrenzungsventil, stromauf dessen Hydraulikmedium für die Arbeitskammern des Hinterachs-Schwenkmotors abgegriffen wird, im Rücklaufzweig des der Fahrzeug-Vorderachse zugeordneten Druckbegrenzungsventils anzuordnen, wobei derjenige Druckregelwert, auf welchen ein Druckbegrenzungsventil den stromauf dessen herrschenden Hydraulikdruck einstellt, für das dem Hydraulikzweig der Vorderachse zugeordnete Druckbegrenzungsventil betragsmäßig etwas höher liegen sollte als der Druckregelwert des dem Hydraulikzweig der Fzg.-Hinterachse zugeordneten Druckbegrenzungsventils.

Wenngleich bislang von einem einzigen Schaltventil sowie einer einzigen Hydraulikleitung je Arbeitskammer des Schwenkmotors gesprochen wurde - so wie dies im Übrigen auch in dem im folgenden erläuterten Ausführungsbeispiel dargestellt ist, so kann doch jeder Arbeitskammer neben einem die Zufuhr von Hydraulikmedium steuernden Schaltventil ein weiteres die Abfuhr von Hydraulikmedium steuerndes Schaltventil in einer separat hierfür vorgesehenen Abfuhr-Leitung zugeordnet sein. Hiermit kann eine Abfuhr von Hydraulikmedium aus der Arbeitskammer beschleunigt erfolgen, insbesondere wenn die Abfuhr-Leitung in einem bereits genannten Rücklaufzweig eines Druckbegrenzungsventils oder allgemein in einem nicht unter Überdruck stehenden Bereich des Hydrauliksystems mündet. Im Falle einer Schwenkmotor-Bauart, bei welcher innerhalb des Schwenkmotorgehäuses jede Arbeitskammer in zwei Teilkammern unterteilt ist, kann die zuführende Hydraulikleitung in der ersten Teilkammer münden und die Abfuhr-Leitung von der zweiten Teilkammer abgehen.

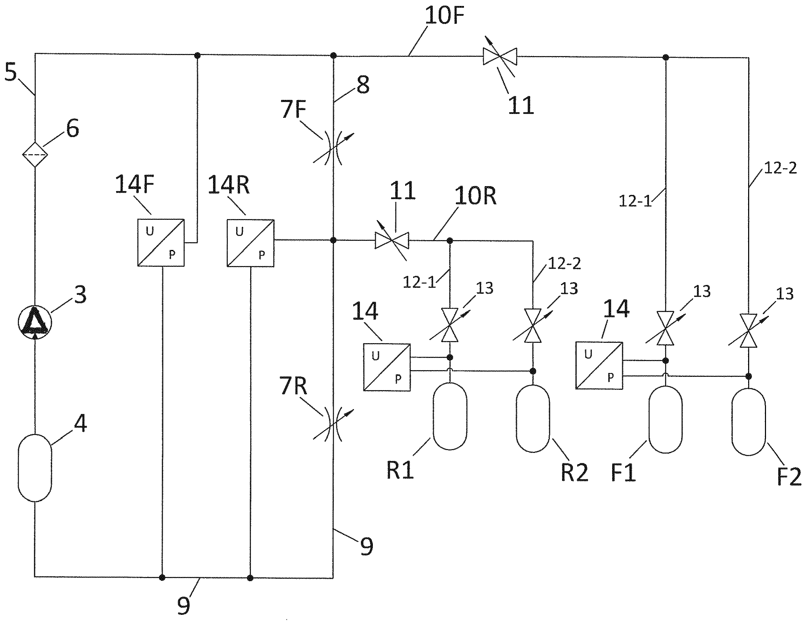

Nunmehr auf das bereits angesprochene Ausführungsbeispiel Bezug nehmend ist in der beigefügten einzigen Figur ein hydraulischer Schaltplan eines erfindungsgemäßen Wankstabilisierungssystems dargestellt.

Mit der Bezugsziffer R1 ist die erste Arbeitskammer und mit der Bezugsziffer R2 die zweite, der ersten Arbeitskammer R1 entgegen wirkende Arbeitskammer eines der Hinterachse eines zweispurigen Fahrzeugs zugeordneten und dem Fachmann grundsätzlich bekannten (sowie bspw. in der eingangs genannten US 5,601,165 gezeigten) hydraulischen Schwenkmotors gekennzeichnet, welcher zwischen den beiden Hälften eines an der Fzg.-Hinterachse vorgesehenen Quer-Stabilisators vorgesehen ist. Analog ist mit der Bezugsziffer F1 die erste Arbeitskammer und mit der Bezugsziffer F2 die zweite, der ersten Arbeitskammer F1 entgegen wirkende Arbeitskammer eines der Vorderachse des Fahrzeugs zugeordneten hydraulischen Schwenkmotors gekennzeichnet, welcher zwischen den beiden Hälften eines an der Fzg.-Vorderachse vorgesehenen Quer-Stabilisators vorgesehen ist.

Es ist eine elektromotorisch angetriebene Pumpe 3 vorgesehen, bei Bedarf gemäß eingezeichnetem Pfeil ein Hydraulikmedium aus einem Vorratsbehälter oder Ausgleichbehälter 4 letztlich in eine bestimmte Arbeitskammer der genannten Schwenkmotoren zu fördern. Hierfür führt eine von der Pumpe 3 abgehende Förderleitung 5 durch eine Filtereinheit 6 zu einem ersten regelbaren Druckbegrenzungsventil 7F, welches stromauf desselben einen ersten veränderbar vorgebbaren Hydraulikdruck einstellt, welcher für die Arbeitskammern F1, F2 der Vorderachse vorgesehen ist. Wie bei solchen Druckbegrenzungsventilen üblich wird zur Darstellung oder Herstellung dieses ersten vorgebbaren Hydraulikdrucks stromauf des ersten Druckbegrenzungsventils 7F überschüssiges Hydraulikmedium über einen von diesem Druckbegrenzungsventil 7F abgehenden Rücklaufzweig 8 abgeführt. Dieser Rücklaufzweig 8 geht weiter zu einem zweiten regelbaren Druckbegrenzungsventil 7R, welches stromauf desselben einen zweiten veränderbar vorgebbaren Hydraulikdruck einstellt, welcher für die Arbeitskammern R1, R2 der Hinterachse vorgesehen ist. Selbstverständlich liegt dieser zweite vorgebbare Hydraulikdruck betragsmäßig zumindest geringfügig unterhalb des ersten vorgebbaren (und für die Fzg.-Vorderachse vorgesehenen) Hydraulikdrucks. Wie üblich wird auch zur Darstellung oder Herstellung des zweiten vorgebbaren Hydraulikdrucks stromauf des zweiten Druckbegrenzungsventils 7R überschüssiges Hydraulikmedium über einen von diesem Druckbegrenzungsventil 7R abgehenden Rücklaufzweig 9 abgeführt. Dieser Rücklaufzweig 9 mündet im Ausgleichsbehälter 4.

Zurückkommend auf die Förderleitung 5, in der bei Betrieb und ausreichender Förderleistung der Pumpe 3 stromauf des Vorderachs-Druckbegrenzungsventils 7F der an diesem vorgegebene und somit von diesem eingestellte erste (und für die Arbeitskammern F1, F2 des Vorderachs-Schwenkmotors vorgesehene) Hydraulikdruck herrscht, liegt dieser auch in einer direkt an die Förderleitung 5 angeschlossenen (und für die Arbeitskammern F1, F2 vorgesehenen) hydraulischen Versorgungsleitung 10F vor, in welcher ein erstes Sicherheits-Schaltventil 11 vorgesehen ist. Die Funktion dieses Sicherheits-Schaltventils 11 wurde vor der Figurenbeschreibung erläutert, weshalb an dieser Stelle dorthin verwiesen wird. Ein zweites solches Sicherheits-Schaltventil 11 befindet sich in einer für die Arbeitskammern R1, R2 des Hinterachs-Schwenkmotors vorgesehenen hydraulischen Versorgungsleitung 10R, welche vom Rücklaufzweig 8 des Vorderachs-Druckbegrenzungsventils 7F abzweigt und in welcher der durch das Hinterachs-Druckbegrenzungsventil 7R eingestellte Hydraulikdruck herrscht.

Der sich jeweils an die Sicherheits-Schaltventile 11 anschließende Teil des Hydrauliksystems ist für die Vorderachse bzw. deren Schwenkmotor-Arbeitskammern F1, F2 und für die Hinterachse bzw. deren Schwenkmotor-Arbeitskammern R1, R2 gleich aufgebaut, weswegen dies nun für beide gleichzeitig erläutert wird. Konkret verzweigt sich die jeweilige hydraulische Versorgungsleitung 10F bzw. 10R stromab des jeweiligen Sicherheits-Schaltventils 11 in eine der jeweiligen ersten Arbeitskammer F1 bzw. R1 zugeordnete Hydraulikleitung 12-1 und in eine zweite der jeweiligen zweiten Arbeitskammer F2 bzw. R2 zugeordnete Hydraulikleitung 12-2. Jede dieser Hydraulikleitungen mündet unter passieren eines Schaltventils 13 in der jeweiligen Arbeitskammer. Wie vor der Figurenbeschreibung ausführlich erläutert wurde, wird jedes dieser Schaltventile 13 von einer figürlich nicht gezeigten elektronischen Steuereinheit geeignet angesteuert und dabei entweder geöffnet oder geschlossen - um unnötige Wiederholungen zu vermeiden wird an dieser Stelle aufgrund der vorangegangenen ausführlichen Erläuterung hierauf nicht weiter eingegangen.

Wie erläutert wurde, berücksichtigt die besagte elektronische Steuereinheit im Rahmen der gezielten Ansteuerung der arbeitskammer-individuellen Schaltventile 13 unter anderem den hydraulischen Differenzdruck zwischen den beiden Arbeitskammern eines Schwenkmotors. Daher ist stromab der beiden Schaltventile 13 eines jeden Schwenkmotors und somit zwischen dessen Hydraulikleitungen 12-1 und 12-2 ein Differenzdrucksensor 14 vorgesehen. Weitere Differenzdrucksensoren 14F und 14R sind vorgesehen, den vom jeweiligen regelbaren Druckbegrenzungsventil 7F bzw. 7R eingestellten genannten ersten bzw. zweiten Hydraulikdruck zu messen und sind daher geeignet angeschlossen. Konkret misst der Differenzdrucksensor 14F die Druckdifferenz zwischen der Versorgungsleitung 10F bzw. der Förderleitung 5 und dem im Ausgleichsbehälter mündenden Rücklaufzweig 9 und es misst der Differenzdrucksensor 14R die Druckdifferenz zwischen der Versorgungsleitung 10R (bzw. dem Rücklaufzweig 8 stromauf des zweiten Druckbegrenzungsventils 7R) und dem Rücklaufzweig 9.

Wenngleich vorliegend ein hydraulisches Wankstabilisierungssystem beschrieben wurde und beansprucht wird sowie anhand eines hydraulisches Schaltkreises beispielhaft erläutert wurde, so kann parallel oder alternativ auch ein Verfahren zum Betreiben eines hydraulischen Wankstabilisierungssystems mit den wesentlichen gegenständlichen Merkmalen beansprucht werden. Unter den Verwendung des vorliegenden Patentanspruchs 1 könnte ein solcher Verfahrensanspruch beispielsweise wie folgt lauten:
Verfahren zum Betreiben eines hydraulischen Wankstabilisierungssystems eines zweispurigen Fahrzeugs mit einem geteilten Querstabilisator an zumindest einer Achse, dessen Stabilisatorhälften mittels eines hydraulischen Schwenkmotors gegeneinander tordierbar sind, indem ein von einer Pumpe gefördertes Hydraulikmedium durch Hydraulikleitungen mit mehreren von einer elektronischen Steuereinheit ansteuerbaren Ventilen gezielt in zwei einander entgegen wirkende Arbeitskammern des Schwenkmotors eingebracht wird, dadurch gekennzeichnet, dass die Pumpe elektromotorisch angetrieben wird und damit hinsichtlich ihrer Förderleistung geregelt betrieben wird und dass arbeitskammer-individuelle Schaltventile, die in jeder zu einer der beiden Arbeitskammern des Schwenkmotors führenden Hydraulikleitungen vorgesehen sind, von der elektronischen Steuereinheit unter Berücksichtigung des Fahrzustandes des Fahrzeugs sowie dem Wert des hydraulischen Differenzdrucks zwischen den beiden Arbeitskammern gezielt geöffnet oder geschlossen werden.

## Patentansprüche

1. Hydraulisches Wankstabilisierungssystem eines zweispurigen Fahrzeugs mit einem geteilten Querstabilisator an zumindest einer Achse, dessen Stabilisatorhälften mittels eines hydraulischen Schwenkmotors gegeneinander tordierbar sind, indem ein von einer Pumpe (3) gefördertes Hydraulikmedium durch Hydraulikleitungen (5, 10F, 10R, 12-1, 12-2) mit mehreren von einer elektronischen Steuereinheit ansteuerbaren Ventilen (7F, 7R, 11, 13) gezielt in zwei einander entgegen wirkende Arbeitskammern (F1, F2, R1, R2) des Schwenkmotors eingebracht wird,
**dadurch gekennzeichnet, dass** die Pumpe (3) elektromotorisch angetrieben und damit hinsichtlich ihrer Förderleistung regelbar ist und dass in jeder zu einer der beiden Arbeitskammern (F1, F2, R1, R2) des Schwenkmotors führenden Hydraulikleitung (12-1, 12-2) ein dieser Arbeitskammer zugeordnetes Schaltventil (13) vorgesehen ist, welche Schaltventile (13) von der elektronischen Steuereinheit unter Berücksichtigung des Fahrzustandes des Fahrzeugs sowie dem Wert des hydraulischen Differenzdrucks zwischen den beiden Arbeitskammern gezielt geöffnet oder geschlossen werden.

2. Hydraulisches Wankstabilisierungssystem nach Anspruch 1, wobei der Antriebsmotor der Pumpe (3) von der elektronischen Steuereinheit unter Berücksichtigung des Fahrzustandes des Fahrzeugs und/oder dem Wert des hydraulischen Differenzdrucks zwischen der Förderseite der Pumpe (3) und deren Saugseite gesteuert betrieben wird.

3. Hydraulisches Wankstabilisierungssystem nach Anspruch 1 oder 2, mit einem stromlos geschlossenen Sicherheits-Schaltventil (11) in einer den beiden Arbeitskammern (F1, F2, R1, R2) des Schwenkmotors zugeordneten hydraulischen Versorgungsleitung (10F, 10R), welche sich in Förderrichtung der Pumpe (3) betrachtet stromab dieses Sicherheits-Schaltventils (11) in denen einzelnen Arbeitskammern zugeordnete Hydraulikleitungen (12-1, 12-2) verzweigt.

4. Hydraulisches Wankstabilisierungssystem nach einem der vorangegangenen Ansprüche, wobei die Saugseite der Pumpe (3) an einen Ausgleichsbehälter (4) angeschlossen ist, in den ein Rücklaufzweig (9) eines Druckbegrenzungsventils (7R) mündet, welches in einer von der Förderseite der Pumpe abgehenden Förderleitung (5) vorgesehen ist und stromauf dessen Hydraulikmedium für die Arbeitskammern (F1, F2, R1, R2) abgegriffen wird.

5. Hydraulisches Wankstabilisierungssystem nach einem der vorangegangenen Ansprüche an einem zweiachsigen Fahrzeug, das sowohl an der Vorderachse als auch an der Hinterachse einen hydraulischen Schwenkmotor zur Wankstabilisierung aufweist, wobei ein der Hinterachse zugeordnetes Druckbegrenzungsventil (7R), stromauf dessen Hydraulikmedium für die Arbeitskammern (R1, R2) des Hinterachs-Schwenkmotors abgegriffen wird, im Rücklaufzweig (8) des der Fahrzeug-Vorderachse zugeordneten Druckbegrenzungsventils (7F) liegt.

6. Hydraulisches Wankstabilisierungssystem nach Anspruch 4 oder 5, wobei das oder die Druckbegrenzungsventil(e) (7F, 7R) regelbar ist/sind, so dass sich der stromauf dieser einstellende Hydraulikdruck durch die elektronische Steuereinheit veränderbar ist.

7. Hydraulisches Wankstabilisierungssystem nach einem der vorangegangenen Ansprüche, wobei jeder Arbeitskammer (F1, F2, R1, R2) neben einem die Zufuhr von Hydraulikmedium steuernden Schaltventil (13) ein weiteres die Abfuhr von Hydraulikmedium steuerndes Schaltventil zugeordnet ist.

8. Verfahren zum Betreiben eines hydraulisches Wankstabilisierungssystems eines zweispurigen Fahrzeugs mit einem geteilten Querstabilisator an zumindest einer Achse, dessen Stabilisatorhälften mittels eines hydraulischen Schwenkmotors gegeneinander tordierbar sind, indem ein von einer Pumpe (3) gefördertes Hydraulikmedium durch Hydraulikleitungen (5, 10F, 10R, 12-1, 12-2) mit mehreren von einer elektronischen Steuereinheit ansteuerbaren Ventilen (7F, 7R, 11, 13) gezielt in zwei einander entgegen wirkende Arbeitskammern (F1, F2, R1, R2) des Schwenkmotors eingebracht wird,
**dadurch gekennzeichnet, dass** die Pumpe (3) elektromotorisch angetrieben und damit hinsichtlich ihrer Förderleistung geregelt wird und dass in jeder zu einer der beiden Arbeitskammern (F1, F2, R1, R2) des Schwenkmotors führenden Hydraulikleitung (12-1, 12-2) ein dieser Arbeitskammer zugeordnetes Schaltventil (13) vorgesehen ist, welche Schaltventile (13) von der elektronischen Steuereinheit unter Berücksichtigung des Fahrzustandes des Fahrzeugs sowie dem Wert des hydraulischen Differenzdrucks zwischen den beiden Arbeitskammern gezielt geöffnet oder geschlossen werden.

## Claims

1. A hydraulic roll stabilisation system of a two-track vehicle, comprising a divided anti-roll bar on at least one axle, the stabiliser halves of which can be twisted in relation to each other by means of a hydraulic rotary actuator in that a hydraulic medium conveyed by a pump (3) is introduced in a targeted manner through hydraulic lines (5, 10F, 10R, 12-1, 12-1) having a plurality of valves (7F, 7R, 11, 13) that can be controlled by an electronic control unit into two working chambers (F1, F2, R1, R2) of the rotary actuator that act against each other,
**characterised in that** the pump (3) is driven by electric motor and thus the delivery rate of the pump can be controlled, and **in that,** in each hydraulic line (12-1, 12-2) leading to one of the two working chambers (F1, F2, R1, R2) of the rotary actuator, a switch valve (13) associated with said working chamber is provided, which switch valves (13) are opened or closed in a targeted manner by the electronic control unit under consideration of the driving state of the vehicle and the value of the hydraulic differential pressure between the two working chambers.

2. A hydraulic roll stabilisation system according to claim 1, wherein the drive motor of the pump (3) is operated in a manner controlled by the electronic control unit under consideration of the driving state of the vehicle and/or the value of the hydraulic differential pressure between the delivery side of the pump (3) and the intake side thereof.

3. A hydraulic roll stabilisation system according to claim 1 or 2, with a normally closed safety switch valve (11) in a hydraulic supply line (10F, 10R) which is associated with the two working chambers (F1, F2, R1, R2) of the rotary actuator and which, considered in the delivery direction of the pump (3), branches downstream of said safety switch valve (11) into hydraulic lines (12-1, 12-2) associated with the individual working chambers.

4. A hydraulic roll stabilisation system according to any one of the preceding claims, wherein the intake side of the pump (3) is connected to a compensation reservoir (4) into which a return branch (9) of a pressure-limiting valve (7R) leads, which valve is provided in a delivery line (5) originating from the delivery side of the pump, with hydraulic medium for the working chambers (F1, F2, R1, R2) being tapped upstream of said valve.

5. A hydraulic roll stabilisation system according to any one of the preceding claims on a two-track vehicle which has a hydraulic rotary actuator for roll stabilisation both on the front axle and on the rear axle, wherein a pressure-limiting valve (7R) associated with the rear axle, upstream of which hydraulic medium for the working chambers (R1, R2) of the rear-axle rotary actuator is tapped, lies in the return branch (8) of the pressure-limiting valve (7F) associated with the vehicle front axle.

6. A hydraulic roll stabilisation system according to claim 4 or 5, wherein the pressure-limiting valve(s) (7F, 7R) is/are controllable so that the hydraulic pressure established upstream thereof can be changed by the electronic control unit.

7. A hydraulic roll stabilisation system according to any one of the preceding claims, wherein each working chamber (F1, F2, R1, R2), besides a switch valve (13) controlling the feed of hydraulic medium, is also assigned a further switch valve controlling the removal of hydraulic medium.

8. A method for operating a hydraulic roll stabilisation system of a two-track vehicle comprising a divided anti-roll bar on at least one axle, the stabiliser halves of which can be twisted in relation to each other by means of a hydraulic rotary actuator in that a hydraulic medium conveyed by a pump (3) is introduced in a targeted manner through hydraulic lines (5, 10F, 10R, 12-1, 12-2) having a plurality of valves (7F, 7R, 11, 13) that can be controlled by an electronic control unit into two working chambers (F1, F2, R1, R2) of the rotary actuator that act against each other,
**characterised in that** the pump (3) is driven by electric motor and thus the delivery rate of the pump can be controlled, and **in that,** in each hydraulic line (12-1, 12-2) leading to one of the two working chambers (F1, F2, R1, R2) of the rotary actuator, a switch valve (13) associated with said working chamber is provided, which switch valves (13) are opened or closed in a targeted manner by the electronic control unit under consideration of the driving state of the vehicle and the value of the hydraulic differential pressure between the two working chambers.

## Revendications

1. Système de stabilisation antiroulis hydraulique d'un véhicule à deux lignes de roues ayant sur au moins un essieu, un stabilisateur transversal subdivisé dont les moitiés peuvent être déformées par torsion l'une par rapport à l'autre au moyen d'un moteur hydraulique oscillant du fait qu'un fluide hydraulique refoulé par une pompe (3) est introduit sélectivement par des conduites hydrauliques (5, 10F, 10R, 12-1, 12-2) ayant plusieurs soupapes (7F, 7R, 11, 13) pouvant être commandées par une unité de commande électronique dans deux chambres de travail (F1, F2, R1, R2) agissant à l'opposé l'une de l'autre du moteur oscillant,
**caractérisé en ce que**
la pompe (3) est à commande électro-motorisée, et sa puissance de refoulement, peut ainsi être réglée, et il est prévu, dans chaque conduite hydraulique (12-1, 12-2) conduisant à l'une des deux chambres de travail (F1, F2, R1, R2) du moteur oscillant, une soupape de commutation (13) associée à cette chambre de travail, les soupapes de commutation (13) pouvant être de façon ciblé ouvertes ou fermées par l'unité de commande électronique en prenant en considération l'état de conduite du véhicule ainsi que la valeur de la pression hydraulique différentielle entre les deux chambres de travail.

2. Système de stabilisation antiroulis hydraulique conforme à la revendication 1,
dans lequel le moteur d'entraînement de la pompe (3) est actionnée de façon commandée par l'unité de commande électronique en prenant en considération l'état de conduite du véhicule et/ou la valeur de la pression hydraulique différentielle entre le côté refoulement de la pompe (3) et le côté aspiration de celle-ci.

3. Système de stabilisation antiroulis hydraulique conforme à la revendication 1 ou 2,
comprenant une soupape de commutation de sécurité (11) fermée en l'absence de courant située dans une conduite d'alimentation hydraulique (10F, 10R) associée aux deux chambres de travail (F1, F2, R1, R2) du moteur oscillant, qui se ramifie,
en aval de cette soupape de commutation de sécurité (11), dans la direction de refoulement de la pompe (3), dans les conduites hydrauliques (12-1, 12-2) individuelles associées aux chambres de travail.

4. Système de stabilisation antiroulis hydraulique conforme à l'une des revendications précédentes,
dans lequel le côté aspiration de la pompe (3) est connecté à un réservoir d'équilibrage (4) dans lequel débouche une branche de retour (9) d'une soupape de limitation de pression (7R) qui est située dans une conduite de refoulement (5) partant du côté de refoulement de la pompe, et en amont de laquelle est prélevé du fluide hydraulique pour les chambres de travail (F1, F2, R1, R2).

5. Système de stabilisation antiroulis hydraulique conforme à l'une des revendications précédentes,
destiné à un véhicule à deux essieux qui comporte un moteur oscillant hydraulique sur l'essieu avant et également sur l'essieu arrière, pour permettre une stabilisation anti-roulis, dans lequel une soupape de limitation de pression (7R) associée à l'essieu arrière et en amont de laquelle est prélevé du fluide hydraulique pour les chambres de travail (R1, R2) du moteur oscillant de l'essieu arrière, est située dans la branche de retour (8) de la soupape de limitation de pression (7F) associée à l'essieu avant du véhicule.

6. Système de stabilisation antiroulis hydraulique conforme à la revendication 4 ou 5,
dans lequel la ou les soupape(s) de limitation de pression (7F, 7R) est(sont) susceptible(s) d'être réglées de sorte que la pression hydraulique s'établissant en amont de celle-ci puisse être modifiée par l'unité de commande électronique.

7. Système de stabilisation antiroulis hydraulique conforme à l'une des revendications précédentes,
dans lequel à chaque chambre de travail (F1, F2, R1, R2) est associée, outre une soupape de commutation (13) commandant l'alimentation en fluide hydraulique (13), une autre soupape de commutation commandant l'évacuation du fluide hydraulique.

8. Procédé de gestion d'un système de stabilisation anti-roulis hydraulique d'un véhicule à deux lignes de roues comportant sur au moins un essieu, un stabilisateur transversal subdivisé dont les moitiés peuvent être déplacées par torsion l'une par rapport à l'autre au moyen d'un moteur hydraulique oscillant, du fait qu'un fluide hydraulique refoulé par une pompe (3) est introduit sélectivement, par des conduites (5, 10F, 10R, 12-1, 12-2) ayant plusieurs soupapes (7F, 7R, 11, 13) pouvant être commandées par une unité de commande électronique dans deux chambres de travail (F1, F2, R1, R2) agissant à l'opposé l'une de l'autre du moteur oscillant,
**caractérisé en ce que**
la pompe (3) est à commande électro-motorisée, et sa puissance de refoulement, peut ainsi être réglée, et il est prévu dans chaque conduite hydraulique (12-1, 12-2) conduisant à l'une des deux chambres de travail (F1, F2, R1, R2) du moteur oscillant, une soupape de commutation (13) associée à chaque chambre de travail, les soupapes de commutation (13) pouvant être de manière ciblée ouvertes ou fermées par l'unité de commande électronique en prenant en considération l'état de conduite du véhicule ainsi que la valeur de la pression hydraulique différentielle entre les deux chambres de travail.
